# EUROPÄISCHE PATENTSCHRIFT

(11) **EP 2 518 848 B1**
(45) Veröffentlichungstag und Bekanntmachung des Hinweises auf die Patenterteilung: **16.04.2014**
(21) Anmeldenummer: 11163888.8
(22) Anmeldetag: 27.04.2011
(51) Int. Cl.: H02G 3/14

(54) **Rahmen für elektrisches Installationsgerät.**
Frame for electrical installation device
Cadre pour un appareil d'installation électrique

(43) Veröffentlichungstag der Anmeldung: 31.10.2012
(73) Patentinhaber: Hager Industrie AG, 6020 Emmenbrücke (CH)
(72) Erfinder: Kienert, Stefan, 4622 Egerkingen (CH)
(74) Vertreter: Braun, André jr.

(56) Entgegenhaltungen:
- EP-A1- 0 491 534
- EP-A1- 1 610 422
- EP-A1- 1 727 170
- EP-A2- 1 737 008
- DE-U1-202006 006 354
- US-A1- 2007 227 867
- US-A1- 2008 101 066
- US-B1- 6 371 637

## Beschreibung

Die Erfindung betrifft einen Rahmen für ein elektrisches Installationsgerät zur Auf- oder Unterputzmontage gemäss dem Oberbegriff des Anspruchs 1.

### Beschreibung

Im Stand der Technik sind Rahmen für insbesondere unter Putz montierte Elektroinstallationsgeräte bekannt. Solche Rahmen erfüllen dabei nicht nur einen gestalterischen Zweck, sondern dienen auch zur Abdeckung eines Bereichs zwischen dem Elektroinstallationsgerät oder - apparat an sich und dem Rand des Untergrunds, auf welchem die Montage erfolgt. Zudem dient der Rahmen auch vor dem Zugriff auf elektrische Verdrahtung.

Heutige Elektroinstallationsgeräte sind in vielfältiger Ausführung vorhanden, als Schalter, Taster, Steckdosen, Thermostaten, Bewegungsmelder, Lichtregler und dergleichen mehr. Im Stand der Technik sind Apparate und/oder entsprechende Rahmen mit Leuchteinrichtungen bekannt, um bspw. eine Tasterbeschriftung zu beleuchten oder den Apparat auch nachts auffindbar zu machen.

Aus DE 102007046818 A1 ist eine elektrische Steckdose für die Unterputzmontage mit Leuchtmitteln und mindestens einer Lichtaustrittsfläche bekannt. Die Leuchtmittel, vorzugsweise LED und die sie versorgende Elektronik, sind dem Steckdosensockel zugeordnet und in der Unterputzeinbaudose angeordnet. Durch eine einstückige Ausbildung des Zentralstücks mit Lichtaustrittsfläche und den angeformten Lichteinleitungskörpern sei eine konstruktiv sehr einfache Möglichkeit gefunden worden, die Lichtaustrittsfläche über oder im Abdeckrahmen, also seitlich neben der Öffnung der Unterputzeinbaudose zu platzieren, so dass kein separates Lichtleitelement in das Zentralstück einzusetzen und zu fixieren sei. Das transparent ausgebildete Zentralstück ist an den Stellen ohne Lichtaustritt lichtdicht beschichtet.

Einer der Nachteile der Erfindung besteht darin, dass die Lichtquelle im Zentralstück angeordnet sein muss. Dies ist aus Platzgründen nicht bei jedem Zentralstück möglich, etwa wenn die Dose praktisch vollständig durch das Zentralstück ausgefüllt ist.

In der DE 20 2006 006 354 U wird ein elektrisches Installationsgerät gezeigt, das eine Tragplatte zum Anbringen elektrischer Elemente und zur Befestigung in einer Wanddose aufweist. Auf der Tragplatte wird ein Rahmen vorgesehen, der an seiner Aussenseite von einer flächenförmigen Leuchte und einem über der Leuchte liegenden transparenten Deckrahmen umgeben ist, so dass das Installationsgerät an seiner äusseren Seite leuchten kann. Eine Änderung des Erscheinungsbildes des Installationsgeräts ist nur durch eine vollständige Neumontage der einzelnen Bauelemente möglich.

Es ist daher Aufgabe der vorliegenden Erfindung, ein verbessertes Elektroinstallationsgerät vorzuschlagen, welches die Nachteile des Stands der Technik nicht aufweist.

Diese Aufgabe wird erfindungsgemäss durch einen Rahmen mit den Merkmalen des Patentanspruchs 1 gelöst. Vorteilhafte Ausgestaltungen und Weiterbildungen der Erfindung sind in den abhängigen Ansprüchen angegeben.

Der erfindungsgemässe Rahmen für ein elektrisches Installationsgerät zur Auf- oder Unterputzmontage umfasst mindestens ein Leuchtmittel zum Abstrahlen von Licht sowie ein Lichtstreuelement zum Verteilen des abgestrahlten Lichts und eine zu dessen Montage ausgebildete Trägerplatte, welche mit einem Frontrahmen des Rahmens derart verbunden ist, dass ein durch diese gebildeter seitlicher Lichtaustrittsspalt besteht, um das vom Lichtstreuelement verteilte Licht durch den sich mindestens abschnittsweise entlang des Rahmens erstreckenden seitlichen Lichtaustrittsspalts an die Umgebung abzugeben.

Einer der Vorteile der Erfindung besteht darin, dass unabhängig von einem in die Dose, insbesondere Unterputzdose eingesetzter Apparat ein Rahmen vorhanden ist, an dessen Umfang mindestens stellenweise Licht an die Umgebung abgestrahlt wird.

Ein anderer Vorteil der Erfindung besteht darin, dass der Rahmen als universell verwendbarer, beleuchteter Abdeckrahmen einsetzbar ist, in welchen unterschiedliche elektrische Installationsgeräte eingebaut werden können. Der Begriff universell wird hier verstanden als geeignet für elektrische Installationsgeräte unterschiedlicher Hersteller.

Ein Vorteil der Erfindung besteht auch darin, der Rahmen als aktives, selbstständiges Gerät eine autonome Funktion erfüllt, nämlich, eine Ausleuchtung der Umgebung um den Rahmen herum zu erzielen.

Als weiterer Vorteil der Erfindung besteht darin, dass besagte Ausleuchtung gleichmässig, vorzugsweise symmetrisch ausgebildet ist, also eine Ausleuchtung oder Effektbeleuchtung auf alle Seiten erzielbar ist.

In einer Ausführungsform der Erfindung umfasst die Trägerplatte eine Trägeröffnung mit einer diese mindestens abschnittsweise umgebende Trägerwand, an welcher das Lichtstreuelement mindestens teilweise anliegt.

Einer der Vorteile der Erfindung besteht darin, dass die Trägerwand sowohl als Montageteil für Lichtstreuelement und/oder Leuchtmittel verwendbar ist, sondern den Rahmen auch nach innen abschliesst, so dass eine Art Kammer entsteht, in welcher Lichtstreuelement und Leuchtmittel angeordnet sind. Dabei weist die Kammer den besagten Lichtaustrittsspalt auf, welcher sich vorzugsweise entlang des gesamten äusseren Umfangs des Rahmens erstreckt.

In einer Ausführungsform der Erfindung umfasst der Frontrahmen eine Rückseite, welche der Trägerplatte in montiertem Zustand zugewandt ist, wobei die Rückseite mindestens stellenweise lichtundurchlässig ausgebildet ist.

Einer der Vorteile der Erfindung besteht darin, dass der Frontrahmen nach Bedarf bei der Herstellung lichtundurchlässig hergestellt wird, so dass bei Aufsicht auf den Frontrahmen im Betrieb kein Restlicht ersichtlich ist.

In einer Ausführungsform der Erfindung umfasst der Rahmen mindestens ein Leuchtmittel, welches zum Abstrahlen von Licht bezüglich des Lichtstreuelements angeordnet ist.

Einer der Vorteile der Erfindung besteht darin, dass ein oder mehrere Leuchtmittel einsetzbar sind, um den Abstrahleffekt am äusseren Rand des erfindungsgemässen Rahmens entsprechend zu gestalten.

In einer Ausführungsform der Erfindung ist mindestens ein Leuchtmittel als LED ausgebildet und an einer flexiblen Leiterplatte angeordnet, um das oder jedes Leuchtmittel in montiertem Zustand mit einer Stromquelle elektrisch zu verbinden.

Einer der Vorteile der Erfindung besteht darin, dass die Baugrösse des erfindungsgemässen Rahmens äusserst kompakt gestaltet werden kann, indem eine flexible Leiterplatte mit LEDs in geringer Abmessung eingesetzt wird.

In einer Ausführungsform der Erfindung erstreckt die flexible Leiterplatte sich mindestens stellenweise entlang der Trägerwand.

Einer der Vorteile der Erfindung besteht darin, dass die Trägerwand als Montagemittel ausgebildet ist, um die Leiterplatte daran zu befestigen, bspw. durch Kleben. Das Zusammenstellen des erfindungsgemässen Rahmens ist bei der Herstellung kostengünstig realisierbar.

In einer Ausführungsform der Erfindung ist mindestens ein Leuchtmittel zum Abstrahlen von ein- oder mehrfarbigem Licht ausgebildet.

Einer der Vorteile der Erfindung besteht darin, dass der erfindungsgemässe Rahmen vielfältige Konfigurationen ermöglicht, welche bei der Herstellung nach Kundenwunsch realisierbar sind, wobei der erfinderische Aufbau des Rahmens bestehen bleibt.

In einer Ausführungsform der Erfindung besteht der Frontrahmen aus Glas, Kunststoff und/oder Metall.

Einer der Vorteile der Erfindung besteht darin, dass der erfindungsgemässe Rahmen gegenüber den bekannten Frontrahmen ohne Einschränkung einsetzbar ist.

In einer Ausführungsform der Erfindung ist das Lichtstreuelement aus einem synthetischen Polymer organischer oder anorganischer Natur gebildet ist.

Einer der Vorteile der Erfindung besteht darin, dass das Lichtstreuelement aus den besagten Materialien kostengünstig herstellbar ist.

In einer Ausführungsform der Erfindung weist der Rahmen eine Rahmenöffnung auf, welche für den Einbau universeller elektrischer Installationsgeräte bis zu einem Durchmesser von 58 mm ausgebildet ist.

Ein der der Vorteile der Erfindung besteht darin, dass der Rahmen die Möglichkeit eröffnet, für den Einbau allgemein üblicher elektrischer Installationsgeräte bis zu einem Durchmesser von 58 mm geeignet zu sein.

Die Verwendung des erfindungsgemässen Rahmens ist insbesondere für elektrische Installationsgeräte zur Unterputzmontage vorgesehen. Dabei weist ein Installationsgerät vorzugsweise einen an einer Befestigungsplatte montierbaren Installationsgeräteeinsatz und ein Einsatzteil und/oder Befestigungsteil auf. Der Rahmen wird vorzugsweise mit der Befestigungsplatte lösbar verbunden.

Weitere die Erfindung verbessernde Massnahmen werden nachstehend gemeinsam mit der Beschreibung eines bevorzugten Ausführungsbeispiels der Erfindung anhand der Figuren näher dargestellt.

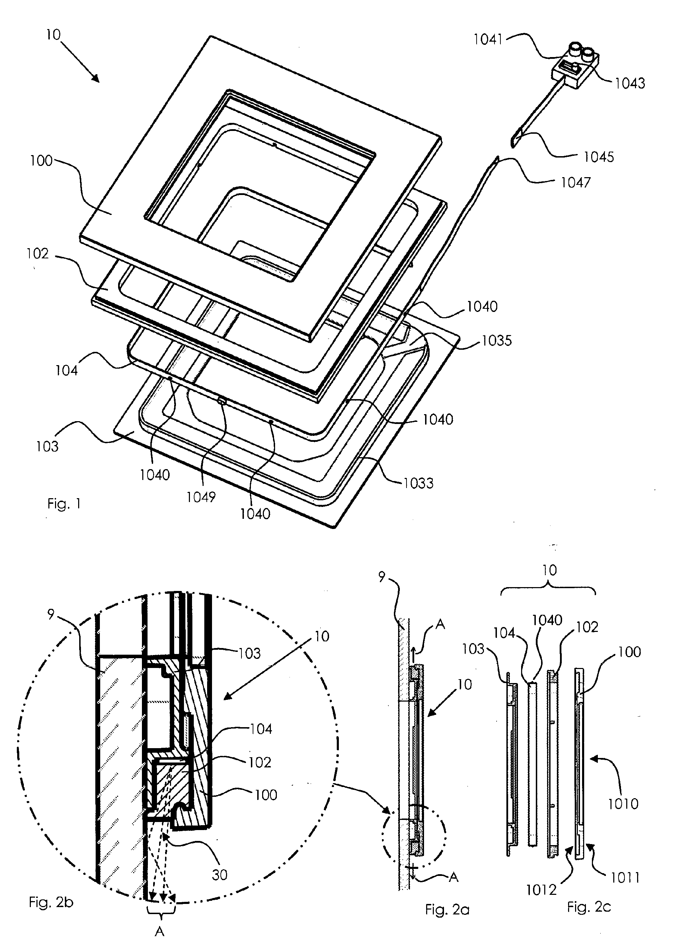

Fig. 1 zeigt eine Ausführungsform des erfindungsgemässen Rahmens für ein Installationsgerät aus einer Vielzahl elektrischer Installationsgeräte in einer perspektivischen Explosionsdarstellung;
Fig. 2a, 2b und Fig. 2c zeigen jeweils einen vollständigen oder aber abgebrochen dargestellten Halbschnitt des erfindungsgemässen Rahmens an einem Gebäudeteil bzw. als Explosions- oder Detaildarstellung;

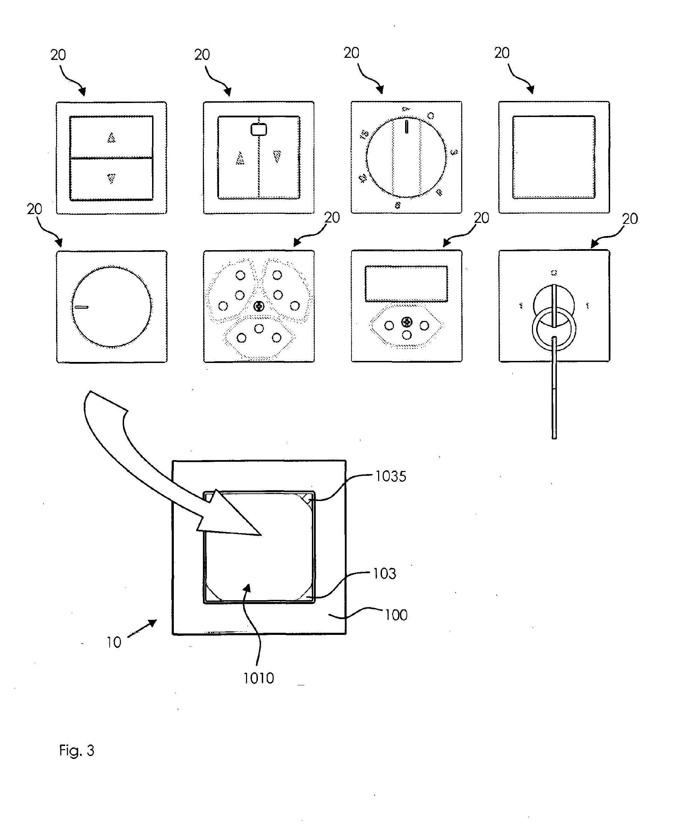

Fig. 3 zeigt einen erfindungsgemässen Rahmen für elektrische Installationsgeräte oder -apparate, wobei mehrere Fertigapparate veranschaulicht sind, welche alternativ in den Rahmen einsetzbar sind;

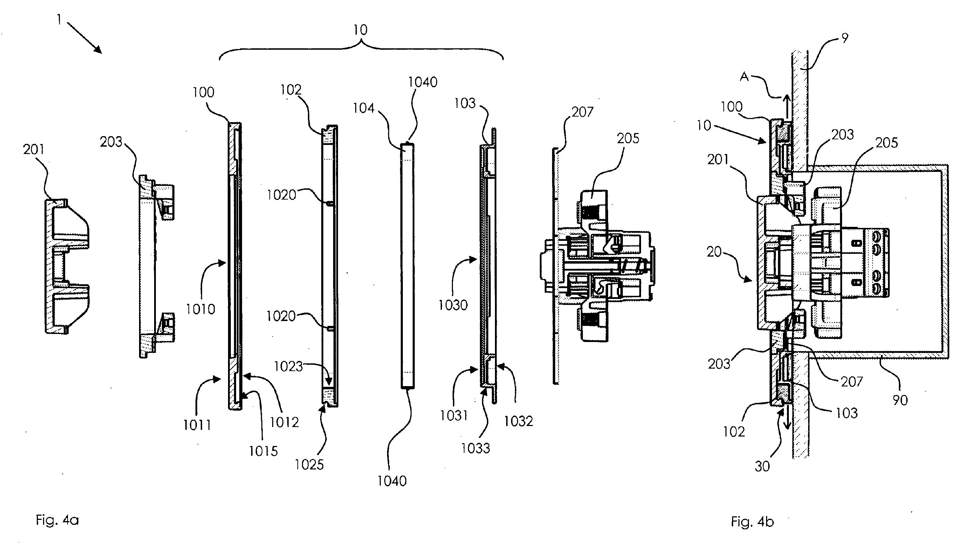

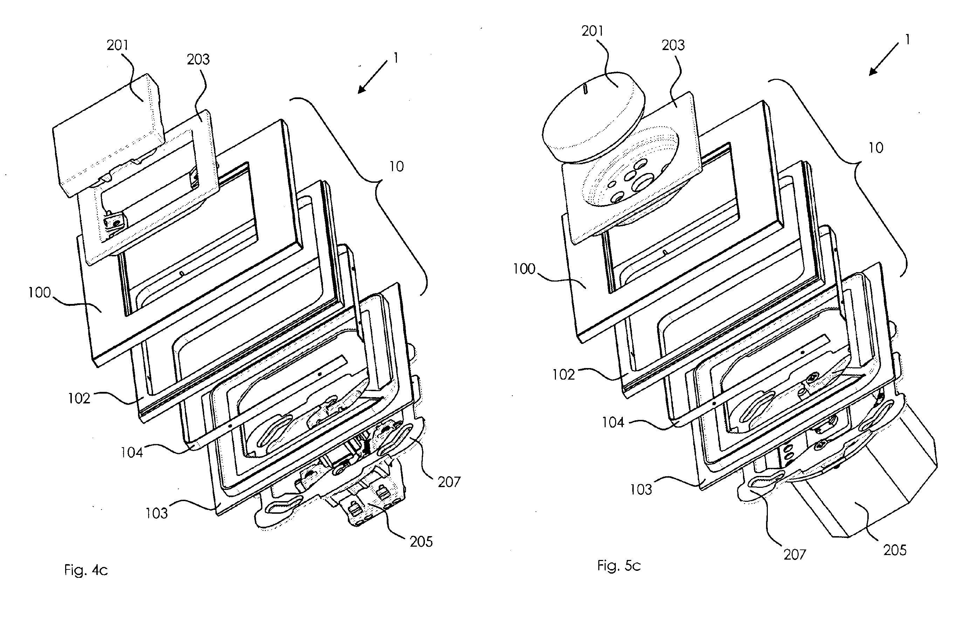

Fig. 4a und 4b zeigen einen als Taster bzw. Schalter ausgebildeten Elektroinstallationsapparat mit einem erfindungsgemässen Rahmen in einer Schnittdarstellung als Explosionszeichnung bzw. im montierten Zustand an einem Gebäudeteil; Fig. 4c zeigt besagten Apparat mit Rahmen in einer explodierten perspektivischen Darstellung;

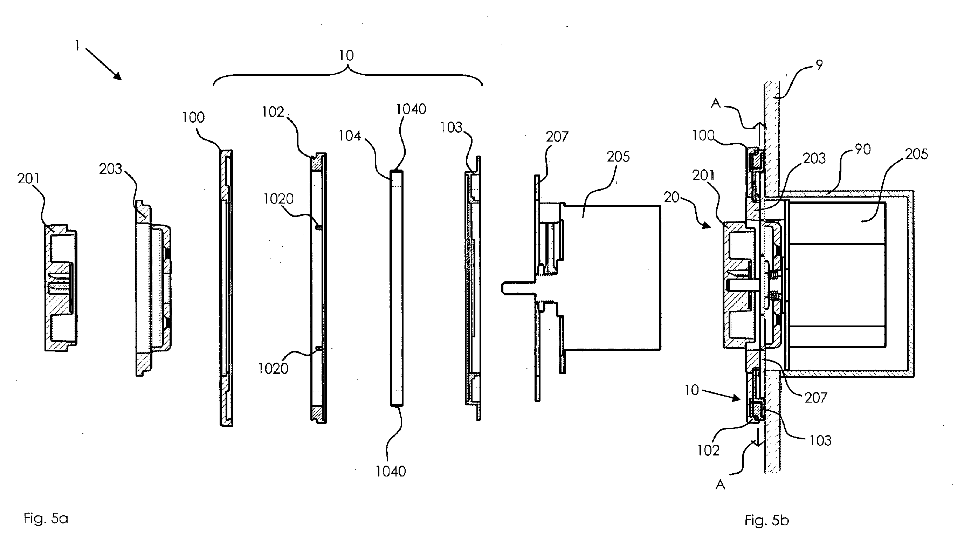

Fig. 5a und 5b zeigen einen als Drehlichtregler ausgebildeten Elektroinstallationsapparat mit einem erfindungsgemässen Rahmen in einer Schnittdarstellung als Explosionszeichnung bzw. im montierten Zustand an einem Gebäudeteil; Fig. 5c zeigt besagten Apparat mit Rahmen in einer explodierten perspektivischen Darstellung;

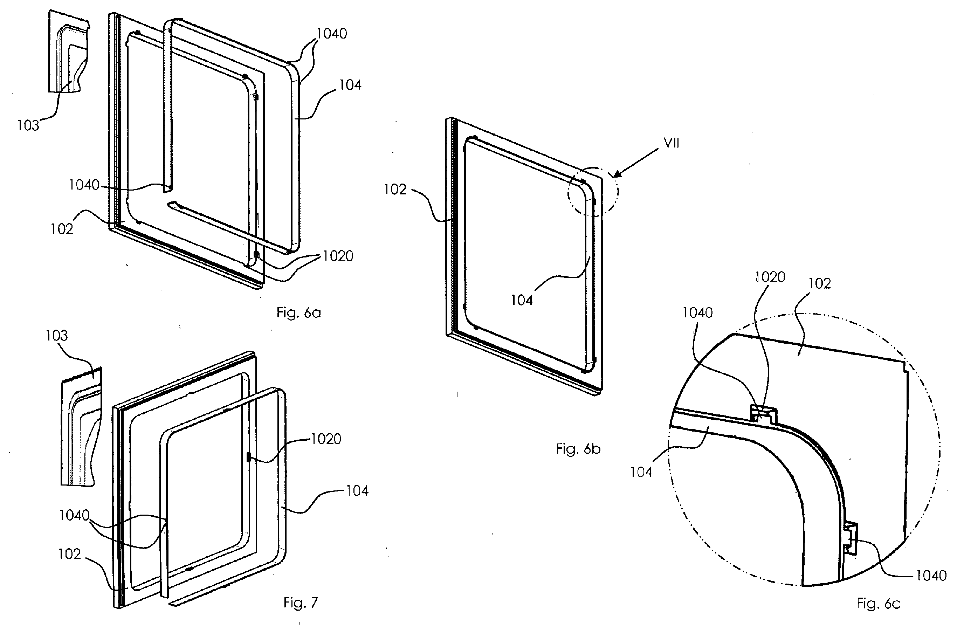

Fig. 6a, 6b und 6c zeigen eine Ausführungsform des erfindungsgemässen Rahmens in einer Explosionsdarstellung mit einer abgebrochen dargestellten Trägerplatte, einem Lichtstreuelement sowie Leuchtmitteln, welche mit einem flexiblen Stromleiter elektrisch verbunden sind, wobei die Leuchtmittel im Bereich der Ecken des Rahmens angeordnet sind und wobei die Leuchtmittel seitlich in das Lichtstreuelement einstrahlen;
Fig. 7 zeigt eine Ausführungsform des erfindungsgemässen, nur teilweise dargestellten Rahmens, wobei seitlich abstrahlende Leuchtmittel in Schenkel des Lichtstreuelements derart einstrahlen, dass das Licht im Wesentlichen von der Einstrahlsstelle hin zu der jeweiligen Ecke des Lichtstreuelements verteilt wird, bevor das Licht seitlich austritt;

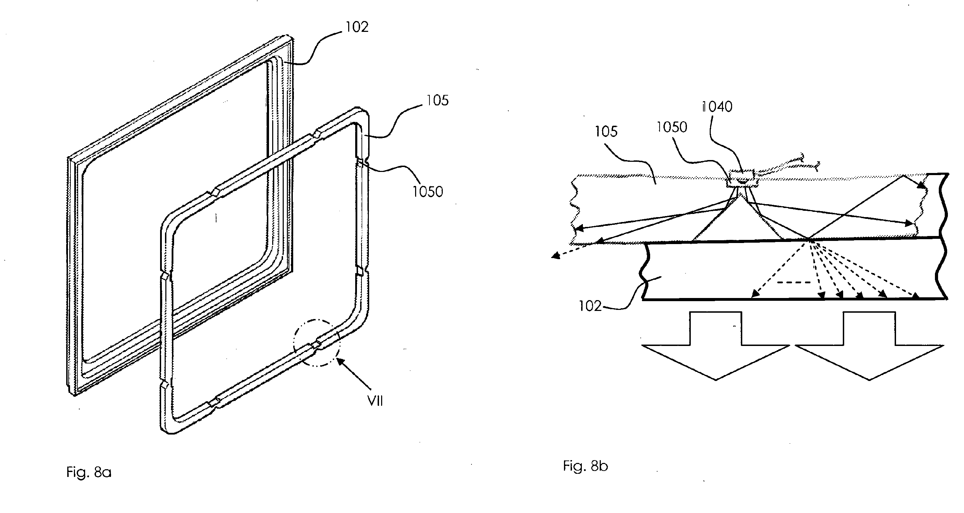

Fig. 8a und 8b zeigen eine andere Ausführungsform der Erfindung, wobei das Lichtstreuelement ein Licht leitendes Element aufweist, in welches Licht von Leuchtmitteln eingestrahlt wird, wobei das verteilte Licht wiederum in das Lichtstreuelement einstrahlt, um von dort durch den Lichtaustrittsspalt seitlich an die Umgebung abzustrahlen.

Figur 1 illustriert in einer Explosionsdarstellung einen erfindungsgemässen Rahmen 10 für ein elektrisches Installationsgerät 1, wobei der Rahmen 10 zum Abgeben von Licht an die Umgebung entlang seines äusseren Rands ausgebildet ist. Der Rahmen 10 wird auch als Abdeckplatte oder Frontrahmen bezeichnet. Das abgegebene Licht hat nicht nur gestaltenden Charakter zur Erzielung von Beleuchtungseffekten, etwa indem mittels ein- oder mehrfarbigen Leuchtmitteln 1041 und/oder mittels farbigem Lichtstreuelement 102 ein Installationsgerät beleuchtbar ist, sondern auch den Vorteil, dass der Rahmen im Dunkeln sehr gut auffindbar ist, unabhängig, welche Funktion das Installationsgerät aufweist. Der Rahmen 10 kann auch mittels einer Blindabdeckung an einem Gebäudeteil montiert werden.

Das Bezugszeichen 100 bezeichnet den Frontrahmen oder die Frontplatte des Rahmens 10. Diese kann aus Glas, Kunststoff und/oder Metall bestehen. Der Rahmen 10 umfasst eine Trägerplatte 103, welche mit der Frontplatte 100 verbindbar ist. Zwischen Trägerplatte 103 und Frontrahmen 100 ist mindestens ein Leuchtmittel 1040 sowie ein Lichtstreuelement 102 angeordnet. In zusammengebautem, zusammengesetztem oder verbundenem Zustand ist zwischen Frontplatte 100 und Trägerplatte 103 am äusseren Umfang ein seitlicher Lichtaustrittsspalt vorhanden, welcher in diesem Bereich durch eine Beabstandung von Front- und Trägerplatte gebildet wird und in Figur 2b mit Bezugszeichen 30 bezeichnet ist. In diesem Spalt ist in zusammengesetztem Zustand des Rahmens 10 das Lichtstreu- oder Lichtverteilelement 102 angeordnet.

Zwischen Lichtverteilelement und einer mit Bezugszeichen 1033 bezeichneten Trägerwand, welche auch als Kragen bezeichnet wird, liegt ein Stromleiter 104 an. Dieser ist bspw. als flexible Leiterplatte ausgebildet und weist mindestens zwei Pole 1047 zum elektrischen Verbinden der Leiterplatte an einer Stromquelle auf. Nach Herstellung des Rahmens 10, also in zusammengesetztem Zustand desselben, ist das eine Endstück der flexiblen Leiterplatte 104 durch einen Kanal 1035 der Trägerplatte hin zur Öffnung des Rahmens 10 geführt. Die Leiterpole 1047 können direkt mit einer Klemme oder einem Anschlussstück 1041 oder mittels eines aus Drähten oder flexibler Leiterplatte ausgebildeten Zwischenstücks verbunden werden. Die Klemme 1041 und/oder die flexible Leiterplatte 104 können einen Schalter oder Regler 1043 aufweisen, um die Lichtstärke des oder jedes Leuchtmittels 1040 zu verändern. Der Schalter kann als Stufenschalter oder als stufenloser Regler realisiert sein. Die flexible Leiterplatte 104 kann zudem einen Schalter 1049 aufweisen, welcher es einem Benutzer ermöglicht, den Stromkreis für Leuchtmittel zu unterbrechen und so den Beleuchtungseffekt auch in montiertem Zustand des Rahmens 10 ein- oder auszuschalten. Der Schalter 1049 ist vorzugsweise als Mikroschalter ausgebildet. Vorliegend wird eine flexible Leiterplatte mit jeweils zwei Leuchtmitteln 1040 pro Seite des Rahmens 10 illustriert. Je nach Bedarf ist die Leiterplatte mit mehr oder weniger Leuchtmitteln konfigurierbar.

Das Lichtstreuelement 102, auch als Lichtverteilelement bezeichnet, hat die positive Eigenschaft, die eher punktuelle Lichtabstrahlung eines als LED ausgebildeten Leuchtmittels breitflächig zu verteilen. Dieser Effekt kann durch veränderte Materialeigenschaften des Lichtverteilelements 102 beeinflusst werden. Vorzugsweise ist das Lichtstreuelement 102 aus Silikon gebildet. Die zum Lichtaustrittsspalt 30 hingewandte Aussenfläche des Lichtstreuelements 102 ist derart bearbeitet, dass das Licht austritt und eine möglichst gleichmässige Ausleuchtung bewirkt.

Das Lichtstreuelement 102 kann transparent oder in verschiedenen Farben und/oder Farbkombinationen realisiert werden. Der erfindungsgemässe Rahmen 10 ist dadurch nicht nur als funktionales Element bspw. zum verbesserten Auffinden des Installationsapparats, sonder darüber hinaus auch als Designelement einsetzbar. Das Lichtstreuelement 102 ist aus einem thermoplastischen Elastomer. Bevorzugt wird Silikon verwendet. Um beim Lichtstreuelement 102 eine Zum Lichtaustrittsfläche zu erzeugen, wird der entsprechende Bereich der Oberfläche des Lichtstreuelements 102 aufgeraut. Dies kann bspw. durch mechanische Bearbeitung durch Schleifen oder auch mittels eines optischen Lasers erreicht werden. Um den Lichtaustritt aus dem Lichtstreuelement 102 zu verhindern, wird die entsprechende Oberfläche des Lichtstreuelements 102 poliert.

Das Lichtstreuelement 102 wirkt vorzugsweise auch als Dichtelement, so dass der Eintritt von Feuchtigkeit aus der Umgebung in das Installationsgerät verhindert werden kann. Dies wird einerseits dadurch erreicht, indem das Lichtstreuelement 102 eine die Trägerplatte 103 überragende Lippe aufweist, welche in montiertem Zustand auf dem Gebäudeteil aufliegt. Zudem ist das Lichtstreuelement 102 in montiertem Zustand zwischen Trägerplatte 103 und Frontplatte geklemmt.

Das Lichtstreuelement 102 wird vorzugsweise im Spritzgiessverfahren, im Kompressionsverfahren oder durch Stanzung hergestellt.

Als Leuchtmittel 1040 werden vorzugsweise LED verwendet, wobei frontal und/oder seitlich abstrahlende LED verwendbar sind.

Die Verteilung des Lichts kann auch dadurch verändert werden, indem das Lichtverteilelement 102 aus mehreren Komponenten oder Teilen besteht. So weist dieses bspw. ein Licht leitendes Element 105 auf, in welches Licht vom Leuchtmittel 1040 eingekoppelt wird, wobei das Lichtleitelement 105 das eingekoppelte Licht an das Lichtstreuelement 102 abgibt. Das Lichtleitelement 105 weist dabei eine Lichtaustrittsfläche auf, welche grösser als die Lichteintrittsfläche ist. Das Licht streuende oder verteilende Element 12 ist bspw. aus Silikon gebildet. Das Licht leitende Element 105 ist vorzugsweise aus Polycarbonat oder einem aus Glasfaser bestehenden Teil gebildet. Diese Konfiguration des erfindungsgemässen Rahmens ist in den Figuren 8a und 8b illustriert.

Der Rahmen 10 ist als aktives elektrisches Bauteil ausgebildet und kann unabhängig von der Funktion eines elektrischen Installationsgeräts betrieben werden. Diesfalls wird die Rahmenöffnung 1010 mit einer Blindabdeckung abgedeckt oder verschlossen.

Figuren 2a, 2b und Fig. 2c illustrieren einen erfindungsgemässen Rahmen 10 in an einem Gebäudeteil montierten Zustand, in einer Explosionsdarstellung sowie in einer Detailansicht. Figur 2b zeigt ein Detail aus Figur 2a, wobei das Bezugszeichen 9 ein Gebäudeteil zeigt, an welchem de Trägerplatte 103 anliegt. Zwischen Trägerplatte und Frontrahmen 100 ist das Lichtstreuelement 102 angeordnet, welches das von Leuchtmitteln ausgestrahlte Licht durch einen Lichtaustrittsspalt 30 an die Umgebung abgibt. Die mit Pfeil A bezeichneten Lichtstrahlen einer vereinfacht dargestellten Lichtverteilungskurve zeigen den Verlauf des Lichts. Teilweise wird aus dem Lichtaustrittsspalt 30 austretendes Licht von dem Gebäudeteil 9 wieder reflektiert. Aus dem Detail in Figur 2a ist auch ersichtlich, dass das Lichtstreuelement 102 mindestens stellenweise am Gebäudeteil 9 anliegt und so eine dichtende Funktion übernimmt. Dadurch kann verhindert werden, dass bspw. bei Nassreinigung des Gebäudeteils 9 ein Fluid, bspw. Wasser, in die Dose bzw. zum nicht dargestellten elektrischen Funktionsteil eindringt. Das dargestellte erfindungsgemässe System 1,10 weist einen Lichtaustrittsspalt 30 entlang des gesamten Umfangs des Rahmens 10 auf. Es ist jedoch auch möglich, einen Lichtaustrittsspalt nur abschnittsweise am Umfang zu realisieren. Der Rahmen 10 kann vier- oder vieleckig, bspw. rund ausgebildet sein. Figur 2c zeigt die Teile der Figur 2a in einer Explosionsdarstellung.

Figur 3 illustriert einen erfindungsgemässen Rahmen 10 für ein Elektroinstallationsgerät 1 in einer frontalen Ansicht. Beispielhaft sind acht in Frontalansicht dargestellte sogenannte Kombinationen 20 gezeigt, bestehend aus Elektroinstallationseinsatz mit Einsatzteil und/oder Befestigungsteil, welche mit dem erfindungsgemässen Rahmen 10 das Installationsgerät 1 bilden. Die Darstellung soll zeigen, dass der Rahmen 10 universell ausgebildet ist. Insbesondere können Elektroinstallationseinsätze bis zu einem allgemein üblichen Aussendurchmesser von 58mm verwendet werden. Als Kombinationen 20 oder Fertigapparate sind hier von oben links nach unten rechts gezeigt; ein Storenschalter/-taster, ein programmierbarer Storenschalter/-taster, ein Kurzzeitschalter, ein Druckschalter/- taster, ein stufenloser Drehlichtregler, eine Dreifachsteckdose, eine Kombination von Druckschalter/-taster und Einfachsteckdose sowie ein Schlüsselschalter.

Figuren 4a, 4b und 4c zeigen ein als Druckschalter ausgebildetes elektrisches Installationsgerät 1 mit einem erfindungsgemässen Rahmen 10.

Figur 4a zeigt eine entsprechende Explosionsdarstellung und Figur 4b eine entsprechende Darstellung des Installationsgeräts 1 in montiertem Zustand an einem Gebäuteteil 9 in einer Einbaudose 90. Der in Figur 4a mit Bezugszeichen 10 dargestellte Rahmen weist einen Frontrahmen 100 mit einer Front- oder Vorderseite 1011, einer Rückseite 1012 und einer Öffnung 1010 auf. Die Rückseite 1012 weist eine Vertiefung mit einem seitlichen Vorsprung oder Rand 1015 auf. Die Rückseite kann mindestens stellenweise lichtundurchlässig ausgebildet sein, was bspw. durch Anbringen einer entsprechenden Beschichtung, etwa durch Aufdampfen von Aluminium oder durch Anbringen einer Folie erreicht wird.

Der Rahmen 10 weist eine Trägerplatte 103 auf, welche mit dem Frontrahmen 100 verbindbar ist, bspw. durch Verklemmen, durch Verkleben oder mittels Schnappverbindungen. Die Trägerplatte 103 weist eine Vorderseite 1031, eine Rückseite 1032 sowie eine Öffnung oder Trägeröffnung 1030 auf. Der Trägerplatte 103 ist eine Wandung mit einer äusseren Wand 1033 angeformt. Diese Aussenwand 1033 verläuft zur Mittelachse des montierten Installationsgeräts im Wesentlichen parallel.

Der Rahmen 10 weist vorzugsweise als biegsame oder flexible Leiterplatte ausgebildete Stromleiter 104 auf. An den Stromleitern 104 sind ein oder mehrere Leuchtmittel 1040 zum Abstrahlen von Licht angeordnet und mit diesen elektrisch verbunden.

Der Rahmen 10 weist zudem ein Lichtstreuelement 102 auf, welches auch als Diffusorelement bezeichnet wird. Es ist zum Verteilen des abgestrahlten Lichts des oder der Leuchtmittel 1040 ausgebildet. Das Lichtstreuelement 102 weist eine mindestens stellenweise verlaufende Ringnut oder Nut 1025 auf, welche an der äusseren Wand angeordnet ist. In montiertem Zustand greift der Vorsprung 1015 der Frontplatte 100 in die die Nut 1025 des Lichtstreuelements 102 ein und dient so der Stabilisierung und Positionierung desselben. Zudem wird das Zusammenfügen der Einzelteile des Rahmens vereinfacht. An der inneren Wand sind eine oder mehrere Ausnehmungen oder Vertiefungen 1020 vorhanden, welche ausgebildet sind, um in montiertem Zustand je mindestens ein Leuchtmittel 1040 aufzunehmen. Vorzugsweise ist das Lichtstreuelement 102 aus einem synthetischen Polymer organischer oder anorganischer Natur, bspw. aus einem Silikon, gebildet. Ein aus Silikon gebildetes Lichtstreuelement 102 verteilt das von dem oder den Leuchtmitteln 1040 abgestrahlten Licht diffus.

Mit Bezugszeichen 207 ist eine Befestigungsplatte, vorzugsweise aus Metall gebildet, bezeichnet. Diese wird üblicherweise zuerst an einem Gebäudeteil befestigt und weist Löcher, Schlitze oder Haken auf, um den Installationsgeräteeinsatz 205, welcher auch als Funktionseinsatz oder schlicht Einsatz bezeichnet wird, daran zu befestigen. Das Bezugszeichen 203 bezeichnet ein Befestigungsteil, welches durch die Öffnung des Rahmens 10 hindurch mit dem Funktionseinsatz 205 und/oder der Befestigungsplatte 207 verbindbar ist. Üblicherweise ist ein Einsatzteil 201, bspw. ein Sichtknopf, vorhanden, welches zum Betätigen des Funktionseinsatzes oder zum Darstellen von Signalen, Information etc., ausgebildet und mit dem Funktionseinsatz diesfalls verbindbar ist. Befestigungsteil 203 und Einsatzteil 201 können einteilig ausgebildet sein.

Figur 4b zeigt die in Figur 4a dargestellten Einzelteile in montiertem Zustand. Erfindungsgemäss weist der Rahmen 10 einen durch den Frontrahmen oder -platte 100 mit der Trägerplatte 103 gebildeten seitlichen Lichtaustrittsspalt 30 auf, so dass das vom Lichtstreuelement 102 verteilte Licht durch diesen seitlichen Lichtaustrittsspalt 30 an die Umgebung abgegeben wird.

Figur 4c illustriert das als Druckschalter ausgebildete elektrische Installationsgerät 1 mit einem erfindungsgemässen Rahmen 10 in einer perspektivischen Explosionsdarstellung

Figuren 5a, 5b und 5c zeigen ein als Drehregler ausgebildetes elektrisches Installationsgerät 1 mit einem erfindungsgemässen Rahmen 10.

Figur 6a zeigt in einer Ausführungsform des erfindungsgemässen Rahmens das Lichtstreuelement 102 und die Leuchtmittel 1040 in einer perspektivischen, vereinfachten Explosionsdarstellung. Die Leuchtmittel sind hier als seitlich abstrahlende LED ausgebildet und auf einem flexiblen Stromleiter 104, auch flexibles Printed Circuit Board (PCB) oder flexible Leiterplatte bezeichnet, angeordnet und mit diesem elektrisch verbunden. Das Bezugszeichen 103 bezeichnet auch hier die Trägerplatte, welche an ein Gebäudeteil oder eine Montagefläche befestigt wird.

Das Bezugszeichen 1020 bezeichnet im Lichtstreuelement 102 angeformte Ausnehmungen. Das Lichtstreuelement weist eine Innenwand auf, in welche sich die bzw. jede Ausnehmung mindestens stellenweise erstreckt.

Figur 6c zeigt ein Detail aus Figur 6b, wobei in einer Ecke des Lichtstreuelements 102 Ausnehmungen 1020 vorhanden sind. Diese sind so ausgelegt, dass das von den seitlich in Richtung R und/oder R' abgestrahlte Licht jeder LED in das Lichtstreuelement 102 eintreten kann, von wo aus es gestreut und an der seitlichen Aussenfläche des Lichtstreuelements 102 an die Umgebung abgestrahlt wird.

Figur 7 zeigt eine Ausführungsform des erfindungsgemässen, nur teilweise dargestellten Rahmens, wobei seitlich abstrahlende Leuchtmittel 1040 in Schenkel des Lichtstreuelements 102 derart einstrahlen, dass das Licht im Wesentlichen von der Einstrahlsstelle hin zu der jeweiligen Ecke des Lichtstreuelements verteilt wird, bevor das Licht seitlich austritt.

Figuren 8a und 8b zeigen eine andere Ausführungsform der Erfindung, wobei das Lichtstreuelement 102 ein Licht leitendes Element 105 aufweist, in welches Licht von Leuchtmitteln 1040 eingestrahlt wird, wobei das verteilte Licht wiederum in das Lichtstreuelement einstrahlt, um von dort durch den Lichtaustrittsspalt (30, Fig. 2b) seitlich an die Umgebung abzustrahlen.

Das erfindungsgemässe elektrische Installationsgerät ist nicht nur wie dargestellt zur Unterputzmontage, sondern ebenfalls zur Aufputzmontage einsetzbar, wobei die Frontplatte vorzugsweise als Aufputzschale ausgebildet ist. Die Aufputzschale ist dabei im Wesentlichen rohr- oder hülsenartig ausgebildet. Der Lichtaustrittsspalt wird gebildet, indem das einem Gebäudeteil zugewandte Ende der Aufputzschale mit der Trägerplatte verbunden wird.

### Bezugszeichenlegende

- 1: Installationsgerät, Elektroinstallationsgerät
- 10: Rahmen, Frontrahmen, Abdeckplatte
- 100: Frontrahmen
- 1010: Frontrahmenöffnung
- 1011: Frontseite, Vorderseite
- 1012: Rückseite
- 1015: Vorsprung, Rand
- 102: Lichtstreuelement, Lichtverteilelement, Diffusorelement
- 1020: Ausnehmung
- 1023: Innenseite
- 1025: Nut
- 103: Trägerplatte
- 1030: Öffnung, Trägeröffnung
- 1031: Vorderseite
- 1032: Rückseite
- 1033: Wand, Trägerwand, Aussenwand
- 1035: Kanal
- 104: Stromleiter, biegsame Leiterplatte
- 1041: Klemme, Anschlussstück
- 1043: Schalter, Regler
- 1045: Kupplung
- 1047: Leiterpole
- 1040: Leuchtmittel, LED
- 1049: Schalter, Mikroschalter
- 105: Lichtleitelement
- 20: Kombination
- 201: Einsatzteil
- 203: Befestigungsteil
- 205: Funktionseinsatz, Installationsgeräteeinsatz, Einsatz
- 207: Befestigungsplatte
- 30: Lichtaustrittsspalt, Spalt, Öffnung
- 9: Gebäudeteil
- 90: Dose
- A: Pfeil
- R,R': Richtung

## Patentansprüche

1. Rahmen (10) für elektrische Installationsgeräte (1) zur Auf- oder Unterputzmontage, der
eine Trägerplatte (103) und einen mit dieser verbindbaren Frontrahmen (100) umfasst, wobei zwischen Tröclerplatte (103) und Frontrahmen (100) mindestens ein Leuchtmittel (1040) angeordnet ist, **dadurch gekennzeichnet,**
**dass** zwischen Trägerplatte (103) und Frontrahmen (100) ein Lichtstreuelement (102) angeordnet ist und ein Lichtaustrittsspalt (30) besteht, wobei das Lichtstreuelement (102) mindestens teilweise aus einem thermoplastischen Elastomer besteht.

2. Rahmen (10) gemäss Anspruch 1, **dadurch gekennzeichnet, dass** das Lichtstreuelement (102) mindestens teilweise aus Silikon besteht.

3. Rahmen (10) gemäss Anspruch 1 oder 2, **dadurch gekennzeichnet, dass** das Lichtstreuelement (102) lichtdurchlässig, insbesondere transparent, ist.

4. Rahmen (10) gemäss einem der vorgenannten Ansprüche, **dadurch gekennzeichnet, dass** das Lichtstreuelement (102) poliert ist oder eine Lichstaustrittsfläche aufweist, die zumindest in einem Bereich aufgeraut ist.

5. Rahmen (10) gemäss einem der vorgenannten Ansprüche, **dadurch gekennzeichnet, dass** die Trägerplatte (103) eine Trägeröffnung (1030) mit einer diese mindestens abschnittsweise umgebende Trägerwand (1033) umfasst, an welcher das Lichtstreuelement (1024) mindestens teilweise anliegt.

6. Rahmen (10) gemäss einem der vorgenannten Ansprüche, **dadurch gekennzeichnet, dass** der Frontrahmen (100) eine Rückseite (1012) umfasst, welche der Trägerplatte (100) in montiertem Zustand zugewandt ist, wobei die Rückseite (1012) mindestens stellenweise lichtundurchlässig ausgebildet ist.

7. Rahmen (10) gemäss einem der vorgenannten Ansprüche, **dadurch gekennzeichnet, dass** der Rahmen (10) mindestens ein Leuchtmittel (1040) umfasst, welches zum Abstrahlen von Licht bezüglich des Lichtstreuelements (102) angeordnet ist.

8. Rahmen (10) gemäss einem der vorgenannten Ansprüche, **dadurch gekennzeichnet, dass** mindestens ein Leuchtmittel (1040) als LED ausgebildet und an einer flexiblen Leiterplatte (104) angeordnet ist, um das oder jedes Leuchtmittel in montiertem Zustand mit einer Stromquelle elektrisch zu verbinden.

9. Rahmen (10) gemäss Anspruch 8, **dadurch gekennzeichnet, dass** die flexible Leiterplatte (104) sich mindestens stellenweise entlang der Trägerwand (1033) erstreckt.

10. Rahmen (10) gemäss einem der vorgenannten Ansprüche, **dadurch gekennzeichnet, dass** mindestens ein Leuchtmittel (1040) zum Abstrahlen von ein- oder mehrfarbigem Licht ausgebildet ist.

11. Rahmen (10) gemäss einem der vorgenannten Ansprüche, **dadurch gekennzeichnet, dass** der Frontrahmen (100) aus Glas, Kunststoff und/oder Metall besteht.

12. Rahmen (10) gemäss einem der vorgenannten Ansprüche, **dadurch gekennzeichnet, dass** dieser eine Rahmenöffnung (1010) aufweist, welche für den universellen Einbau elektrischer Installationsgeräte bis zu einem Durchmesser von 58 mm ausgebildet ist.

13. Rahmen (10) gemäss einem der vorgenannten Ansprüche, **dadurch gekennzeichnet, dass** das Lichtstreuelement (102) vorzugsweise im Spritzgiessverfahren, im Kompressionsverfahren oder durch Stanzung hergestellt ist.

14. Elektrisches Installationsgerät (1) zur Unterputzmontage, mit einem Rahmen (10) gemäss einem der vorgenannten Ansprüche.

## Claims

1. A frame (10) for electrical installation devices (1) for surface or flush mounting which comprises a mounting plate (103) and a front frame (100) which can be attached thereto, wherein at least one illumination means (1040) is arranged between mounting plate (103) and front frame (100), **characterized in that**
a light diffusion element (102) is arranged between mounting plate (103) and front frame (100) and a light emission slit (30) is provided, wherein the light diffusion element (102) is at least partially made of a thermoplastic elastomer.

2. The frame (10) as claimed in claim 1, **characterized in that** the light diffusion element (102) is at least partially made of silicone.

3. The frame (10) as claimed in claim 1 or 2, **characterized in that** the light diffusion element (102) is permeable to light, in particular transparent.

4. The frame (10) as claimed in one of the preceding claims, **characterized in that** the light diffusion element (102) is polished or has a light emission surface which is roughened at least in one region.

5. The frame (10) as claimed in one of the preceding claims, **characterized in that** the mounting plate (103) includes a mounting opening (1030) with a mounting wall (1033), which encompasses said opening at least in sections, and against which the light diffusion element (1024) at least partially rests.

6. The frame (10) as claimed in one of the preceding claims, **characterized in that** the front frame (100) includes a rear side (1012) which faces the mounting plate (100) in the assembled state, wherein the rear side (1012) is designed at least in parts to be impervious to light.

7. The frame (10) as claimed in one of the preceding claims, **characterized in that** the frame (10) includes at least one illumination means (1040) which is arranged to radiate light with regard to the light diffusion element (102).

8. The frame (10) as claimed in one of the preceding claims, **characterized in that** at least one illumination means (1040) is designed in the form of an LED and is arranged on a flexible printed circuit board (104) in order to electrically connect the or each illumination means to a current source in the assembled state.

9. The frame (10) as claimed in claim 8, **characterized in that** the flexible printed circuit board (104) extends at least in places along the mounting wall (1033).

10. The frame (10) as claimed in one of the preceding claims, **characterized in that** at least one illumination means (1040) is designed to radiate monochrome or multicolored light.

11. The frame (10) as claimed in one of the preceding claims, **characterized in that** the front frame (100) is made of glass, plastic and/or metal.

12. The frame (10) as claimed in one of the preceding claims, **characterized in that** it has a frame opening (1010) which is designed for the universal fitting of electrical installation devices up to a diameter of 58 mm.

13. The frame (10) as claimed in one of the preceding claims, **characterized in that** the light diffusion element (102) is preferably produced using the injection molding method, the compression method or by stamping.

14. An electrical installation device (1) for flush mounting having a frame (10) as claimed in one of the preceding claims.

## Revendications

1. Cadre (10) pour appareils d'installation électrique (1) destiné au montage apparent ou sous crépi, qui comprend une plaque support (103) et un cadre avant (100) qui peut être assemblé à cette plaque, au moins un moyen lumineux (1040) étant placé entre la plaque support (103) et le cadre avant (100), **caractérisé**
**en ce qu'**un élément diffuseur de lumière (102) est disposé entre la plaque support (103) et le cadre avant (100) et il subsiste une fente de sortie de lumière (30), l'élément diffuseur de lumière (102) étant au moins partiellement composé d'un élastomère thermoplastique.

2. Cadre (10) selon la revendication 1, **caractérisé en ce que** l'élément diffuseur de lumière (102) est au moins partiellement composé de silicone.

3. Cadre (10) selon l'une des revendications 1 ou 2, **caractérisé en ce que** l'élément diffuseur de lumière (102) est translucide, en particulier transparent.

4. Cadre (10) selon l'une des revendications précitées, **caractérisé en ce que** l'élément diffuseur de lumière (100) est poli ou présente une surface de sortie de lumière qui est dépolie au moins dans une région.

5. Cadre (10) selon l'une des revendications précitées, **caractérisé en ce que** la plaque support (103) présente une ouverture de support (1030) munie d'une paroi de support (1033) qui l'entoure au moins par endroits et avec laquelle l'élément diffuseur de lumière (1024) est au moins partiellement en contact.

6. Cadre (10) selon l'une des revendications précitées, **caractérisé en ce que** le cadre avant (100) comprend un côté arrière (1012) qui est dirigé vers la plaque support (100) à l'état monté, le côté arrière (1012) étant opaque au moins par endroits.

7. Cadre (10) selon l'une des revendications précitées, **caractérisé en ce que** le cadre (10) comprend au moins un moyen lumineux (1040) qui est disposé pour rayonner de la lumière relativement à l'élément diffuseur de lumière (102).

8. Cadre (10) selon l'une des revendications précitées, **caractérisé en ce qu'**au moins un moyen lumineux (1040) est constitué par une DEL et est monté sur une carte de circuit imprimé flexible (104) pour connecter électriquement le ou chaque moyen lumineux à une source de courant à l'état monté.

9. Cadre (10) selon la revendication 8, **caractérisé en ce que** la carte de circuit imprimé flexible (104) s'étend au moins par endroits le long de la paroi de support (1033).

10. Cadre (10) selon l'une des revendications précitées, **caractérisé en ce qu'**au moins un moyen lumineux (1040) est conçu pour rayonner de la lumière mono ou polychromatique.

11. Cadre (10) selon l'une des revendications précitées, **caractérisé en ce que** le cadre avant (100) est composé de verre, de matière plastique et/ou de métal.

12. Cadre (10) selon l'une des revendications précitées, **caractérisé en ce qu'**il présente une ouverture de cadre (1010) qui est conçue pour le montage universel d'appareils d'installation électrique jusqu'à un diamètre de 58 mm.

13. Cadre (10) selon l'une des revendications précitées, **caractérisé en ce que** l'élément diffuseur de lumière (102) est fabriqué de préférence par le procédé de moulage par injection, le procédé de compression ou par découpage.

14. Appareil d'installation électrique (1) pour montage sous crépi, comportant un cadre (10) selon l'une des revendications précitées.
